# EUROPÄISCHE PATENTSCHRIFT

(11) **EP 0 675 070 B1**
(45) Veröffentlichungstag und Bekanntmachung des Hinweises auf die Patenterteilung: **15.09.1999**
(21) Anmeldenummer: 95250026.2
(22) Anmeldetag: 03.02.1995
(51) Int. Cl.: B66F 9/07, E04H 12/16

(54) **Trag- und Führungsvorrichtung, insbesondere ein Mast für Regalbedienungsgeräte**
Supporting and guiding device, in particular a mast for storage retrieval apparatus
Dispositif pour porter et guider, en particulier un mât pour appareils de stockage

(30) Priorität: 04.03.1994 DE 4407862
(43) Veröffentlichungstag der Anmeldung: 04.10.1995
(73) Patentinhaber: MANNESMANN Aktiengesellschaft, 40213 Düsseldorf (DE)
(72) Erfinder: Staggl, Roland, D-58300 Wetter (DE); Oser, Jörg, A-8010 Graz (AT)
(74) Vertreter: Presting, Hans-Joachim, Dipl.-Ing.

(56) Entgegenhaltungen:
- EP-A- 0 079 112
- EP-A- 0 195 740
- DE-A- 1 913 408
- DE-C- 2 606 074
- FR-A- 2 666 607
- US-A- 4 538 954

## Beschreibung

Die Erfindung betrifft eine Trag- und Führungsvorrichtung, insbesondere einen Mast für Regalbedienungegeräte, die einen kastenartigen Profilstab aufweist, der einen Hohlkastenquerschnitt besitzt, wobei zumindest zwei am Hohlkastenquerschnitt einander gegenüberliegende Nuten für Führungsschienen gebildet sind,

Die EP-A-0 195 740 Al zeigt ein stranggepreßtes Kastenprofil aus Leichtmetall mit mindestens einem Verbindungsflansch für jeweils eine Führungsschiene. Der Verbindungsflansch ist dabei als Nut ausgebildet, die sich in Längsrichtung der Führungsschiene erstreckt. Zur Befesfigung der Führungsschiene sind in Längsrichtung beabstandete Schwerspannstifte vorgesehen, die jeweils eine Schraube umgeben. Die Schrauben sind dabei quer durch den Verbindungsflansch und die Führungsschiene geführt und pressen im montierten Zustand die Nutseitenwände gegen die gegenübediegenden Flächen der Führungsschiene. Auf diese Weise wird die Führungsschiene fest mft dem Kastenprofil verbunden.
Bei dieser bekannten Konstruktion ist also die Führungsschiene im entspannten Zustand fest mft dem Kastenprofil verbunden. Dabei bewirkt lediglich die beabstandete Befestigung eine gewisse Dämpfung gegenüber Mastschwingungen, wie sie bei Betrieb der Trag- und Führungsvorrichtung regelmäßig auftreten. Die Führungsschienen in irgendeiner Weise vorzuspannen, um auf diese Weise eine schwingungsdämpfende Wirkung zu entfalten, ist nicht vorgesehen.

Es ist aus der DE-26 06 074 C2 bekannt, einen Metallmast für Regalfahrzeuge als Führung und Träger für eine Hubbühne aus längsweise verlaufenden Gurten und Verstrebungen zu bilden. Daraus entsteht ein sehr schweres kastenartiges Profil mit inneren Kastenwänden und vollwandigen Verbindungsstegen.

Es sind auch Gittermaste aus Profilen bekannt.

Ferner wurden auch schon Rechteck-Rohrmaste aus gepreßten Blechen zusammengefalzt. Schließlich werden Maste aus X-ProfiLen zusammengesetzt.

Allen diesen Vorschlägen haftet der Nachteil des hohen Gewichtes der Trag- und Führungsvorrichtung an. Eine weitere nachteilige Eigenschaft ist die relativ geringe Biegefestigkeit trotz hoher Werkstoffkonzentrationen innerhalb des Querschnitts.

Die bekannten schweren Masten von mehr als 6 m Länge (Höhe) biegen sich auch erheblich durch und damit sind unerwünschte Schwingungen verbunden.

Der im Anspruch 1 angegebenen Erfindung liegt die Aufgabe zugrunde, eine Trag- und Führungsvorrichtung in Leichtbauweise auszuführen, um die bewegte Masse zu verringem und gleichzeitig eine Grundlage für schwingungsdämpfende Maßnahmen zu schaffen.

Die gestellte Aufgabe wird erfindungsgemäß dadurch gelöst, daß die beiden Nuten in gegenüberliegenden Ecken des Hohlkastenquerschnitts angeordnet sind und die Führungsschienen als Zuganker ausgebildet sind und jeweils mit ihren Schienen-Enden in einer Halterung an beiden Stirnenden des Profilstabes fixierbar sowie mittels der Halterung und des Profilstabs vorspannbar sind.
Dadurch entsteht eine Leichtbau-Trag- und Führungsvorrichtung mit den erwünschten Biegefestigkeitseigenschaften. Die geringere bei einem Regalbedienungsgerät zu bewegende Masse gestattet z.B. höhere Beschleunigungswerte oder geringere Antriebskräfte.
Entsprechendes gilt bei Anwendung auf Lineareinheiten der Handhabungstechnik. Vorteilhaft ist die Konzeption eines gewünscht großen Trägheitsmomentes der Kombination Hohlkastenquerschnitt mit zwei oder mehr Führungsschienen.

Andere Vorteile ergeben sich dadurch, daß am Stirnende des Profilstabs die Führungsstangen Gewindeenden zum Festspannen eines Antriebsgehäuses besitzen. Eine solche Bauweise ist in Anbetracht der Profilecken des Hohlkastenquerschnitts besonders günstig.

Eine weitere Gewichtsersparnis tritt dadurch ein, daß der Profilstab aus einem stranggepreßten Leichtmetall-Hohlkastenprofil besteht. Dadurch können z.B. bewährte Aluminium-Legierungen eingesetzt werden.

Eine besonders wertvolle Bauweise entsteht dadurch, daß die Nuten für runde Führungsschienen Halbrundnuten sind. Hierbei können die Rundquerschnitt-Führungsschienen entweder halbkreisförmig oder am Umfang weitergehend geschlossen gestaltet sein. Die beiden Bauarten gestatten, die Führungsschienen entweder schubfest oder nicht schubfest in die Nuten einzuklemmen.

Ein ständiges Problem an solchen Masten sind auftretende Schwingungen bzw. Geräusche. Zur Geräusch- und Schwingungsdämpfung wird vorgeschlagen, daß zwischen den Nuten und den Führungsschienen eine elastisch dämpfende Zwischenschicht eingebracht ist.

Vorteilhafterweise besteht die elastisch dämpfende Zwischenschicht aus dem Kunststoff Polyurethan oder Polyäthylen.

Fertigungstechnisch ist sodann vorteilhaft, daß der Profilstab mit der elastisch dämpfenden Zwischenschicht gleichbleibend dick in den Nuten beschichtet ausgeführt ist oder die Zwischenschicht aus einem elastischen Schlauch auf der Führungsstange vormontiert ist.

Je nach Anwendungszweck ist außerdem vorteilhaft, daß die Führungsschienen oberflächengehärtet sind.

Ein Ausführungsbeispiel der Erfindung ist in der Zeichnung dargestellt und wird im folgenden näher beschrieben. Es zeigen
- Fig. 1: die Rnsicht eines Regalbedienungsgerätes im Aufriß,
- Fig. 2: einen Grundriß des Regalbedienungsgerätes gemäß Fig. 1 und

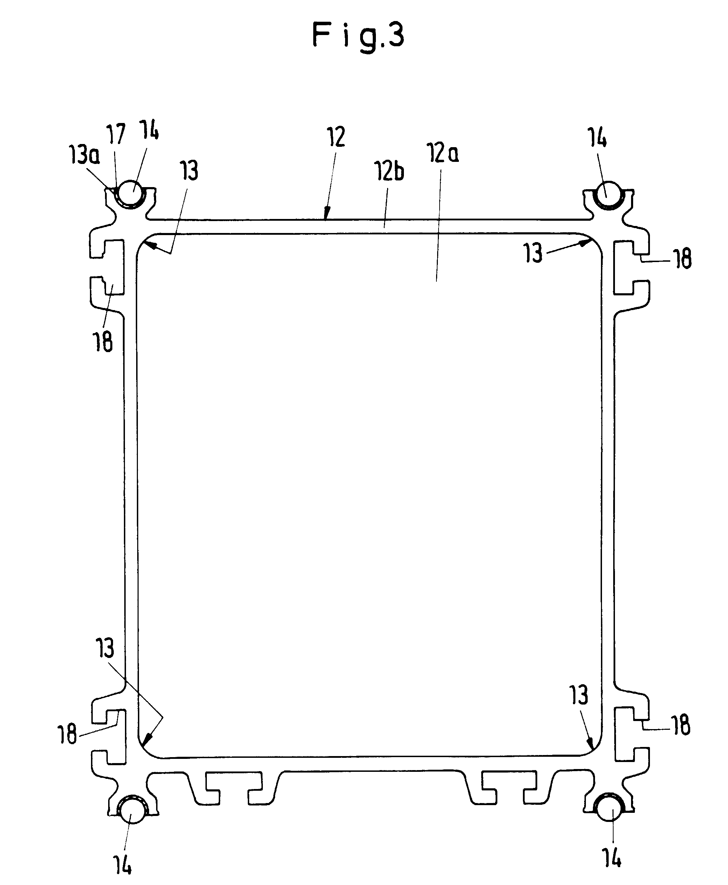

- Fig. 3: einen Querschnitt durch den Mast des Regalbedienungsgerätes.

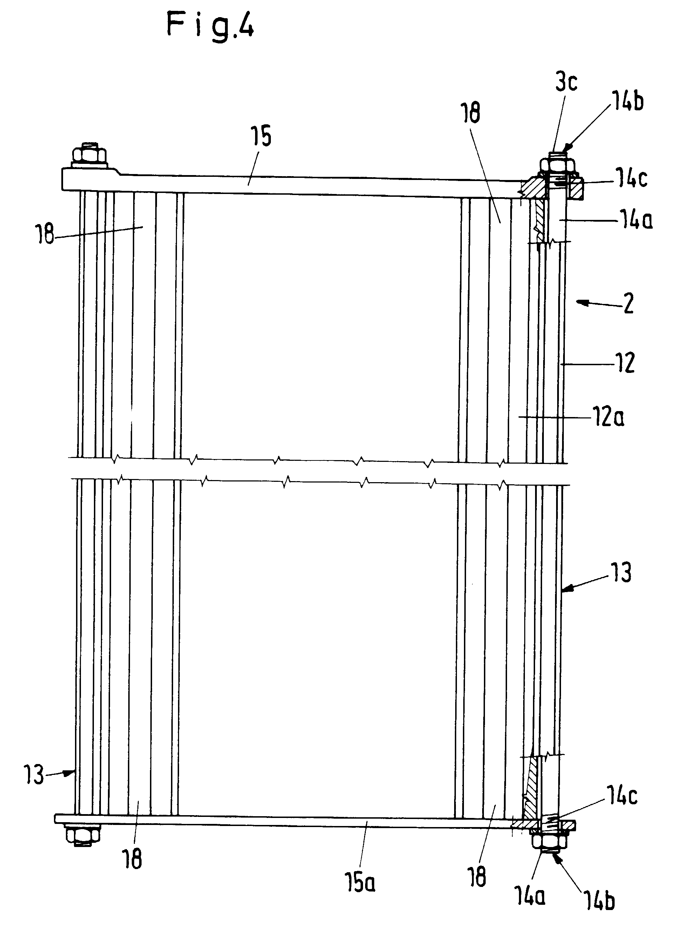

- Fig. 4: den Mast mit Fixierung der Schienen-Enden.

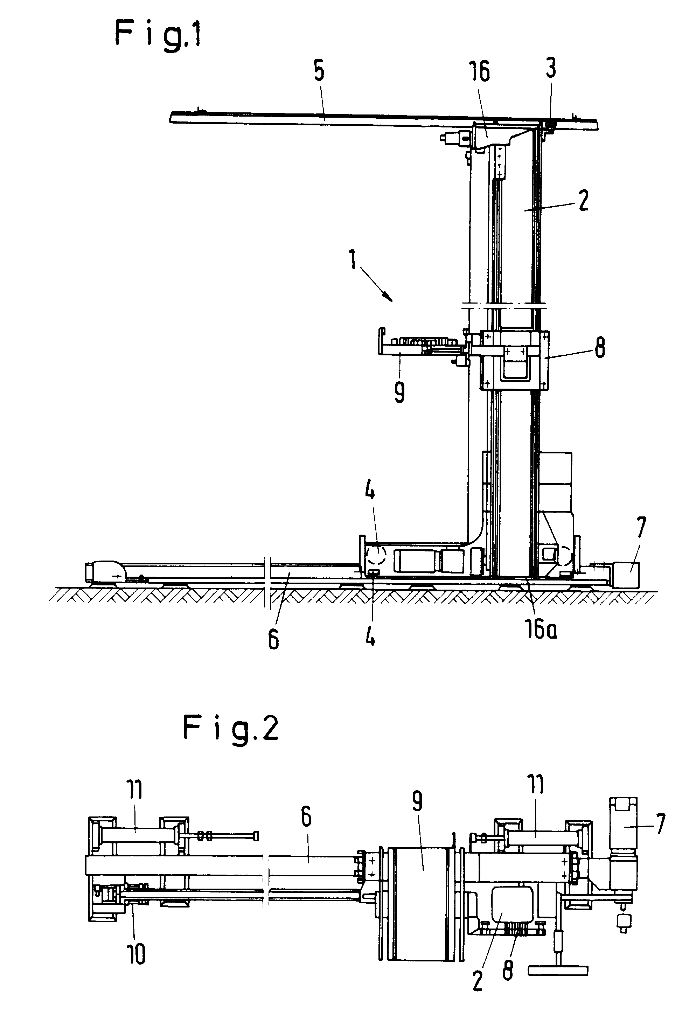

Als Ausführungsbeispiel einer Trag- und Führungsvorrichtung ist ein Mast für ein Regalbedienungsgerät 1 dargestellt (Fig. 1 und 2). Der eigentliche Mast 2 ist mittels Rollenpaaren 3 und 4 an bzw. auf einer oberen Führung 5 und einer auf Flurebene befindlichen unteren Führung 6 verfahrbar und dafür mittels eines Antriebs 7 antreibbar. An dem Mast 2 ist eine angetriebene Hubvorrichtung 8 heb- und senkbar. Die Hubvorrichtung 8 trägt ein Lastaufnahmemittel 9. Das Regalbedienungsgerät kann durch ein umlaufendes Zugmittel um die Umlenkstation 10 oder mittels Reibrad horizontal bewegt werden, was jedoch keine Einschränkung für den Erfindungsgedanken bedeutet. Rußerdem befinden sich in den Endstellungsbereichen jeweils noch Hydraulikpuffer 11.

Die eigentliche Trag- und Führungsvorrichtung besteht aus dem Mast 2 mit einem kastenartigen Profilstab 12, der einen Hohlkastenquerschnitt 12a besitzt. In zumindest zwei sich gegenüberliegenden Ecken 13 des Hohlkastenquerschnitts 12a sind Nuten 13a angeordnet, in denen Führungsschienen 14 laufen, die jeweils mit ihren Schienen-Enden 14a in einer oberen Halterung 15 und in einer unteren Halterung 15a fixiert sind.

Die Führungsschienen 14 sind als Zuganker ausgebildet und mittels der oberen und unteren Halterungen 15 bzw. 15a auf Zug vorgespannt, wodurch der Profilstab 12 eine Druckspannung erhält. An jedem Stirnende 14b des Profilstabs 12 befinden sich Gewindestangen 14c zum Festspannen eines oberen Antriebsgehäuses 16 und/oder eines unteren Antriebsgehäuses 16a, um die Vorspannung aufzubringen.

Der Profilstab 12 kann aus einem besonders leichten, jedoch zähen stranggepreßten Leichtmetall-Hohlkastenprofil 12b bestehen. Die Nuten 13a für runde Führungsschienen 14 (mit kreisförmigem Querschnitt) sind Halbrundnuten. Zwischen den Nuten 13a und den Führungsschienen 14 ist eine elastisch dämpfende Zwischenschicht 17 aus Polyurethan oder Polyäthylen eingebracht. Diese Zwischenschicht 17 kann entweder auf der Innenfläche der Nut 13a oder aber auf der Führungsschiene 14 selbst gleichbleibend dick fest aufgetragen sein. Es ist auch möglich, die Zwischenschicht 17 als Schlauch auf der Führungsschiene 14 vorzumontieren und dieses vorgefügte Teil in die Nut 13a einzukleben. Der gesamte Mast 2 ist an den Umfangsseiten mit Befestigungsnuten 18 für anzubringende Einheiten versehen. Dieselben Befestigungsnuten 18 können auch für die Befestigung des Mastes selbst in einem anderen Zusammenhang dienen.

### Bezugszeichenliste

- 1: Regalbediengerät
- 2: Mast
- 3: Rollenpaar
- 4: Rollenpaar
- 5: Führung, obere
- 6: Führung, untere
- 7: Antrieb
- 8: Hubvorrichtung
- 9: Lastaufnahmemittel
- 10: Bremsen
- 11: Hydraulikpuffer
- 12: Profilstab
- 12a: Hohlkastenquerschnitt
- 12b: Hohlkastenprofil
- 13: Ecken
- 13a: Nuten

- 14: Führungsschienen
- 14a: Schienen-Ende
- 14b: Stirnende
- 14c: Gewindestangen
- 15: Halterung, oben
- 15a: Halterung, unten
- 16: Antriebsgehäuse, oberes
- 16a: Antriebsgehäuse, unteres
- 17: Zwischenschicht, elastisch dämpfend
- 18: Befestigungsnuten

## Patentansprüche

1. Trag- und Führungseinrichtung, insbesondere Mast für Regalbedienungsgeräte, die einen kastenartigen Profilstab aufweist, der einen Hohlkastenquerschnitt besitzt, wobei zumindest zwei am Hohlkastenquerschnitt einander gegenüberliegende Nuten für Führungsschienen gebildet sind,
dadurch gekennzeichnet,
daß die beiden Nuten (13a) in gegenüberliegenden Ecken (13) des Hohlkastenquerschnitts (12a) angeordnet sind und die Führungsschienen (14) als Zuganker ausgebildet sind und jeweils mit ihren Schienen-Enden (14a) in einer Halterung (15 bzw. 15a) an beiden Stimenden des Profilstabes (12) fixierbar sowie mittels der Halterung (15 bzw. 15a) und des Profilstabs (12) vorspannbar sind.

2. Vorrichtung nach Anspruch 1,
dadurch gekennzeichnet,
daß am Stirnende (14b) des Profilsstabs (12) Gewindestangen (14c) zum Festspannen eines Antriebsgehäuses (16 bzw. 16a) angebracht sind

3. Vorrichtung nach einem der Ansprüche 1 oder 2,
dadurch gekennzeichnet,
da8 der Profiltab (12) aus einem stranggepreßten Leichtmetallhohlkastenprofil (12b) besteht.

4. Vorrichtung nach Anspruch 1,
dadurch gekennzeichnet,
daß die Nuten (13a) für runde Führungsschienen (14) Halbrundnuten sind.

5. Vorrichtung nach den Ansprüchen 1 und 4,
daß zwischen den Nuten (13a) und den Führungsschienen (14) eine elastisch dämpfende Zwischenschicht (17) eingebracht ist.

6. Vorrichtung nach einem der Ansprüche 1,4 oder 5,
dadurch gekennzeichnet
daß die elastisch dämpfende Zwischenschicht (17) aus dem Kunststoff Polyurethan oder Polyäthylen besteht.

7. Vorrichtung nach einem der Ansprüche 1 und 4 bis 6,
dadurch gekennzeichnet
daß der Profilstab (12) mit der elastisch dämpfenden Zwischenschicht (17) gleichbleibend dick in den Nuten (13a) beschichtet ist.

8. Vorrichtung nach einem der Ansprüche 1 bis 8,
dadurch gekennzeichnet,
daß die Führungsschienen (14) oberflächengehärtet sind

9. Vorrichtung nach Anpruch 6,
dadurch gekennzeichnet,
daß die Führungsschienen (14) mit einem Kunststoffschlauch vormontiert und anschließend in die Nuten (13a) eingeklebt sind.

## Claims

1. Carrying and guiding device, in particular boom for shelf-servicing devices, which has a box-like profile rod having a hollow box cross-section, wherein at least two opposing grooves are formed on the hollow box cross-section for guide rails, characterised in that the two grooves (13a) are disposed in opposite corners (13) of the hollow box cross-section (12a) and the guide rails (14) are formed as tie rods and are fixable by their rail ends (14a) in a mount (15 and 15a respectively) to both ends of the profile rod (12) and are prestressable by means of the mount (15 and 15a respectively) and of the profile rod (12).

2. Device according to claim 1, characterised in that at the end (14b) of the profile rod (12) threaded bars (14c) are mounted for tightening a drive housing (16 and 16a respectively).

3. Device according to claim 1 or 2, characterised in that the profile rod (12) consists of an extruded light-metal hollow box profile (12b).

4. Device according to claim 1, characterised in that the grooves (13a) are semicircular grooves for round guide rails (14).

5. Device according to claims 1 and 4, characterised in that between the grooves (13a) and the guide rails (14) a resiliently damping intermediate layer (17) is inserted.

6. Device according to one of claims 1, 4 or 5, characterised in that the resiliently damping intermediate layer (17) consists of the plastics material polyurethane or polyethylene.

7. Device according to one of claims 1 and 4 to 6, characterised in that the profile rod (12) is coated with the resiliently damping intermediate layer (17) with a consistent thickness in the grooves (13a).

8. Device according to one of claims 1 to 7, characterised in that the guide rails (14) are surface-hardened.

9. Device according to claim 6, characterised in that the guide rails (14) are preassembled with a plastics hose and are then adhered into the grooves (13a).

## Revendications

1. Dispositif de support et de guidage, en particulier mât pour des appareils de service de rayonnages, qui présente une barre profilée du type caisson, qui possède une section transversale de caisson creux, au moins deux gorges opposées l'une à l'autre sur la section transversale du caisson creux étant formées pour des rails de guidage,
caractérisé en ce que les deux gorges (13a) sont agencées dans des coins opposés (13) de la section transversale du caisson creux (12a), et les rails de guidage (14) sont réalisés comme tirants et peuvent être fixés, à chaque fois, par leurs extrémités (14a) dans un moyen de maintien (15 ou 15a) aux deux extrémités frontales de la barre profilée (12), et être précontraints par le moyen de maintien (15 ou 15a) et la barre profilée (12).

2. Dispositif selon la revendication 1,
caractérisé en ce que des tiges filetées (14c) pour fixer un boîtier d'entraînement (16 ou 16a) sont agencées à l'extrémité frontale (14b) de la barre profilée (12).

3. Dispositif selon une des revendications 1 ou 2,
caractérisé en ce que la barre profilée (12) est constituée d'un profilé (12b) sous forme de caisson creux en métal léger extrudé.

4. Dispositif selon la revendication 1,
caractérisé en ce que les gorges (13a) pour des rails de guidage ronds (14) sont des gorges demi-rondes.

5. Dispositif selon les revendications 1 et 4,
caractérisé en ce que, entre les gorges (13a) et les rails de guidage (14), il est agencé une couche intermédiaire (17) d'amortissement élastique.

6. Dispositif selon une des revendications 1, 4 ou 5,
caractérisé en ce que la couche intermédiaire (17) d'amortissement élastique est constituée de la matière synthétique polyuréthanne ou polyéthylène.

7. Dispositif selon une des revendications 1 et 4 à 6,
caractérisé en ce que la barre profilée (12) est revêtue de la couche intermédiaire (17) d'amortissement élastique d'épaisseur constante dans les gorges (13a).

8. Dispositif selon une des revendications 1 à 7,
caractérisé en ce que les rails de guidage (14) sont durcis en surface.

9. Dispositif selon la revendication 6,
caractérisé en ce que les rails de guidage (14) sont prémontés avec un tube de matière synthétique et, ensuite, sont collés dans les gorges (13a).
